# EUROPEAN PATENT SPECIFICATION

(11) **EP 3 503 678 B1**
(45) Date of publication and mention of the grant of the patent: **07.06.2023**
(21) Application number: 17382898.9
(22) Date of filing: 22.12.2017
(51) Int. Cl.: H05B 6/54, A23L 5/10

(54) **PULSED ELECTRIC FIELD COOKING DEVICE**
GEPULSTE ELEKTRISCHE FELDGARVORRICHTUNG
DISPOSITIF DE CUISSON À CHAMP ÉLECTRIQUE PULSÉ

(43) Date of publication of application: 26.06.2019
(73) Proprietor: BSH Hausgeräte GmbH, 81739 München (DE); BSH Electrodomésticos España, S.A., 50016 Zaragoza (ES)
(72) Inventor: Mir Bel, Jorge, 50019 Zaragoza (ES); Alvarez Lanzarote, Ignacio, Zaragoza (ES)

(56) References cited:
- WO-A1-2006/121397
- WO-A1-2011/139144
- DE-A1-102010 028 780

## Description

### Background of the invention

The present invention relates to a pulsed electric field cooking device comprising a container, a first electrode being designed in a fixed position, a second electrode and a pulsed electric field (PEF) generator for generating electric pulses.

### State of the art

A pulsed electric field (PEF) cooking devices are known in the state of the art. The basic principle of the PEF technology is application of short electric pulses of voltage with duration of microseconds to milliseconds and with different intensity. The processing time is calculated by multiplying the number of pulses times with effective pulse duration. The process is based on pulsed electrical currents delivered to a product placed between a set of electrodes.

A cooking device using a PEF method is known from patent application US 2016 020 59 72 A1 which discloses a process for cooking a food product in a treatment chamber, wherein the treatment chamber comprises two opposite walls each forming an electrode. The process comprises the steps of: (a) placing the food product, optionally in a surrounding liquid, in direct contact with the electrodes; and (b) applying electric pulses generated by a pulsed electric field generator to the electrodes such that the food product is subjected to a pulsed electric field having a field strength of 10-180 V/cm. The total cooking time is 0.5-1000 seconds. Preferably, the number of pulses n is 1-2000000 and the pulses each have a duration τi of 1-20000 µseconds. The food product and, if present, the surrounding liquid, has an electric conductivity of 0.01-10 S/m. Also provided is a cooking system suitable for cooking a food product according to the process.

It is also known from patent application DE 10 2012 222 656 A1 an assembly which comprises a container including a transfer medium, and two electrodes extending on two opposite sides of the container from the outside into the container, where ends of the electrodes are spaced apart from each other and are flattened perpendicular to their longitudinal extension. The electrode ends are roughened with a micro-roughness and depressions of less than 100 microns. An insulation part is formed around some areas of the electrodes. The insulation part is 1-5 mm shorter than the height of the electrode ends. The insulation part in the longitudinal extension of the electrodes has different thicknesses and/or made of different materials. A front area of the insulation part extending close to one of the electrode ends is made of a mechanically more stable and resilient material, where the rear portion of the insulation part is made of plastic. The front part of the insulation is formed towards the end of the electrode, and the remainder part of the insulation partially overlaps towards the side of the container.

From patent application US 2008 171 115 A1 a method of treating food capable of easily softening or pulverizing food in a short time without losing nutrients is known. A shock wave (SW) generated in a shock wave source is applied to food such as an apple or tea leaves to soften or pulverize the food. A large mechanical load is not necessary, so the food is easily softened or pulverized. Moreover, it is not necessary to heat the food, so the food is softened or pulverized in a short time without losing nutrients in the food due to heat during heating.

Patent document WO 2011/139144 A1 discloses a method and system for treating a substantially solid food product wherein cell disruption of the food product occurs and the building up of the necessary rise in temperature required for the processing of macronutrients. The system comprises means that are arranged for subjecting the food product to a pulsed electric field for disruption of the cells of the food product and processing of the macronutrients, making it suitable for the intended consumption and efficient digestion, so that the body optimally takes in the nutrients.

Presented solutions do not provide efficient and reliable ways of processing foodstuff in pulsed electric field cooking devices.

### The aim of the invention

It is the object of the present invention to overcome problems associated with efficient and reliable ways of processing food in pulsed electric field cooking devices as described above and to provide simple and reliable solution.

### Summary of the invention

This object is solved by a pulsed electric field cooking device whereby the second electrode is movable and the movement of the second electrode is performed by elastic means or by a gravity effect.

The movement of the second electrode is performed by elastic means. The second electrode is connected with the container wall by elastic means like springs or the like. Thanks to that, no matter of food size, the second electrode is in constant connection with the processed food during treatment process and after removing food from the treatment chamber the second electrode returns to a starting position. The starting position means a position in which the second electrode is located before inserting food into the treatment chamber.

When the first electrode and the second electrode are parallel to each other and are positioned horizontally, the first electrode is placed at the bottom of the container on which foodstuff is placed. Next, the second electrode is placed manually on the top of the food by the user and thanks to the gravity effect the second electrode stays in contact with food. The positive effect of such solution is that the second electrode stays in constant contact with the processed food even changing the food shape and the risk of interruption of the electric circuit is eliminated.

The device uses pulsed electric field (PEF) method which is a non-thermal technique of food processing that uses electric pulses of high voltage to liquid or semi-solid food placed between two electrodes. Electrodes are placed in a container or can constitute a container walls. For safety reasons the container is made of non-conductive, isolating material.

The movement of the second electrode is provided thanks to the elastic means placed between the second electrode and a wall of the container.

The PEF method is an answer for increasing demand for foods with a high nutritional value and fresh-like characteristics. It's also an alternative to conventional methods of treating food. Characteristic for the technology is that the pasteurization effect takes place at a low temperature, resulting in a better preservation of the natural nutritional value and sensory qualities of the product than is normally obtained with conventional thermal treatment.

The foregoing general description and detailed description, given hereafter, are merely exemplary and are understood as additional explanations of the claimed invention. Other advantages and features of the invention result from the following descriptions, drawings and claims.

### Preferred embodiment of the invention

In the preferred embodiment of the invention the first electrode and the second electrode are in direct contact with a processed food during cooking process.

An electrode is a conductor through which electricity enters or leaves an object, substance, or region. The purpose of the existence of the first and the second electrode is to establish an electrical contact with a non-metallic part of a circuit - here with prepared food. To ensure great performance of the cooking process its desirable to provide continuity of the electric circuit. For this reason the first electrode and the second electrode stay in permanent contact with the processed food. The positive effect is that the electric current flows through food constantly and provides great efficiency of the cooking process.

Advantageously, a distance between the first electrode and the second electrode can be adjusted depending on a food size. The distance between electrodes is adjustable and the positive effect is that no matter what the food size is the electric current flow is ensured because of constant contact of the electrodes with the processed food.

According to the invention the first electrode and the second electrode are parallel to each other and are positioned vertically. Electrodes are parallel to each other and are positioned at a distance one to another to form an area for placing food.

Electrodes are placed inside the container which defines a treatment chamber for receiving food.

In an embodiment which is not according to the invention the first electrode and the second electrode are parallel to each other and are positioned horizontally.

In a favourable embodiment of the invention the treatment chamber is electrically connected with a device which is responsible for applying an electric field. The advantage is that the user can adjust the electric field depending on his needs.

The present invention provides a simple and effective pulsed electric field cooking device in which a constant connection between a cooking object and electrodes are provided. No matter of the size of the cooking object an electric circuit is provided without involvement of the user.

### Brief description of the drawings

Further benefits and advantages of the present invention will become apparent after a careful reading of the detailed description with appropriate reference to the accompanying drawings.

In the drawings:
- Fig. 1: shows a schematic view of a pulsed electric field cooking device according to the invention;
- Fig. 2: shows a schematic view of the pulsed electric field cooking device in an embodiment which is not according to the presently claimed invention;

### Detail description of the invention

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

In the following description of the preferred embodiments of the present invention, similar identical reference numbers designate identical or comparable components.

The use of pulsed electric fields method (PEF) for the food product treatment is known. Typically, such devices comprise a container made out of isolating material, and electrodes connected with power source. The container is filled out with water or other conductive substance and processed food is immersed in this liquid and electric pulses are allowed to penetrate food.

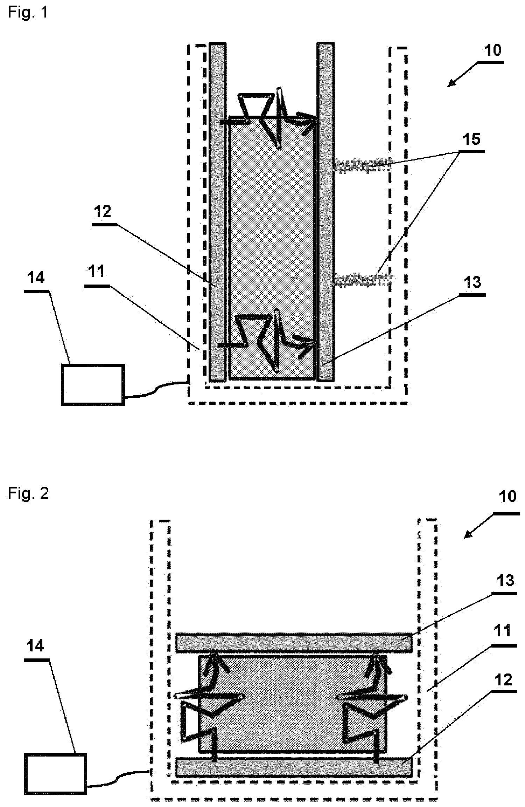

Fig. 1 shows a schematic view of a pulsed electric field cooking device 10 in the first embodiment.

The pulsed electric field cooking device 10 comprises a container 11 which defines a treatment chamber inside of which the cooking process takes place. Inside the container 11 two electrodes are placed: a first electrode 12 which is fixed to the wall of the container 11 and a second electrode 13 which is connected with the wall of the container 11 by two elastic means 15 what allows the movement of the second electrode 13 between different positions depending on size of the cooking food. In the first embodiment of the invention elastic means 15 are springs.

For generating an electric pulse a pulsed electric field generator 14 is provided. The electric current generated in the pulsed electric field generator 14 is transmitted to the first electrode 12 and next to the treatment object and the second electrode 13 creating an electric circuit.

Fig. 1 shows the pulsed electric field cooking device 10 with object to be cooked inside the container 11. The second electrode 13 is pushed by the object towards a wall of the container 11 to which the second electrode 13 is connected by two elastic means 15. Thanks to strength of elasticity of elastic means 15 the second electrode 13 is pushed towards the cooking object therefore a constant connection between the second electrode 13 and the cooking object is provided.

In the first embodiment of the invention electrodes are in vertical position and are parallel to each other. The distance between the first electrode 12 and the second electrode 13 depends on the cooking object size.

Fig. 2 shows a second embodiment which is not part of the present invention. The pulsed electric field cooking device 10 is provided with a container 11 in which a pair of electrodes 12, 13 are placed. The first electrode 12 and the second electrode 13 are parallel to each other and are positioned horizontally. The first electrode 12 is placed at the bottom of the container 11. On the upper surface of the first electrode 12 the cooking object is placed and the second electrode 13 is placed on the top of the cooking object. Thanks to the gravity effect the second electrode 13 touches the cooking object during the whole duration of the cooking process.

The pulsed electric field cooking device 10 is provided with a pulsed electric field generator 14 for generating an electrical current which is necessary for conducting the cooking process.

The present invention provides a simple and effective pulsed electric field cooking device in which a constant connection between a cooking object and electrodes are provided. No matter of the size of the cooking object an electric circuit is provided without involvement of the user.

### LIST OF REFERENCE SIGNS

- 10: pulsed electric field cooking device
- 11: container
- 12: first electrode
- 13: second electrode
- 14: pulsed electric field generator
- 15: elastic means

## Claims

1. A pulsed electric field cooking device (10) comprising:
- a container (11) made of non-conductive, isolating material,
- a first electrode (12) and a second electrode (12) placed in the container (11) parallel to each other,
- the first electrode (12) being designed in a fixed position with respect to the container (11),
- the second electrode (13) being movable with respect to the container (11) and
- a pulsed electric field (PEF) generator (14) for generating electric pulses,
**characterized in that**
- the first electrode (12) and the second electrode (13) are positioned vertically and **in that**
- the movement of the second electrode (13) is performed by elastic means (15) placed between the second electrode (12) and a wall of the container (11).

2. The pulsed electric field cooking device (10) according to claim 1, **characterized in that** the first electrode (12) and the second electrode (13) are in direct contact with a processed food during cooking process.

3. The pulsed electric field cooking device (10) according to claim 1, **characterized in that** a distance between the first electrode (12) and the second electrode (13) can be adjusted depending on a food size.

4. The pulsed electric field cooking device (10) according to any of preceding claims, **characterized in that** the first electrode (12) and the second electrode (13) are electrically connected with the pulsed electric field generator (14) responsible for applying an electric field.

## Patentansprüche

1. Hochspannungsimpuls-Garvorrichtung (10), die Folgendes umfasst:
- einen Behälter (11), der aus nicht leitfähigem Isoliermaterial hergestellt ist,
- eine erste Elektrode (12) und eine zweite Elektrode (12), die parallel zueinander in dem Behälter (11) angeordnet sind,
- wobei die erste Elektrode (12) in Bezug auf den Behälter (11) in einer festen Position ausgeführt ist,
- wobei die zweite Elektrode (13) in Bezug auf den Behälter (11) beweglich ist, und
- einen Hochspannungsimpulsgenerator (PEF-Generator, PEF - Pulsed Electric Field) (14) zum Erzeugen von elektrischen Impulsen,
**dadurch gekennzeichnet, dass**
- die erste Elektrode (12) und die zweite Elektrode (13) vertikal positioniert sind und dass
- die Bewegung der zweiten Elektrode (13) durch elastische Mittel (15) erfolgt, die zwischen der zweiten Elektrode (12) und einer Wand des Behälters (11) angeordnet sind.

2. Hochspannungsimpuls-Garvorrichtung (10) nach Anspruch 1, **dadurch gekennzeichnet, dass** sich die erste Elektrode (12) und die zweite Elektrode (13) bei einem Garvorgang in direktem Kontakt mit einem verarbeiteten Lebensmittel befinden.

3. Hochspannungsimpuls-Garvorrichtung (10) nach Anspruch 1, **dadurch gekennzeichnet, dass** sich ein Abstand zwischen der ersten Elektrode (12) und der zweiten Elektrode (13) je nach Lebensmittelgröße regeln lässt.

4. Hochspannungsimpuls-Garvorrichtung (10) nach einem der vorhergehenden Ansprüche, **dadurch gekennzeichnet, dass** die erste Elektrode (12) und die zweite Elektrode (13) elektrisch mit dem Hochspannungsimpulsgenerator (14) verbunden sind, der für das Anlegen eines elektrischen Felds zuständig ist.

## Revendications

1. Dispositif de cuisson à champ électrique pulsé (10) comprenant :
- un contenant (11) réalisé en un matériau isolant non conducteur,
- une première électrode (12) et une deuxième électrode (12) placées parallèlement l'une à l'autre dans le contenant (11),
- la première électrode (12) étant conçue dans une position fixe par rapport au contenant (11),
- la deuxième électrode (13) étant déplaçable par rapport au contenant (11) et
- un générateur de champ électrique pulsé (CEP) (14) pour la génération d'impulsions électriques, **caractérisé en ce que**
- la première électrode (12) et la deuxième électrode (13) sont positionnées verticalement et **en ce que**
- le mouvement de la deuxième électrode (13) est réalisé par des moyens élastiques (15) placés entre la deuxième électrode (12) et une paroi du contenant (11).

2. Dispositif de cuisson à champ électrique pulsé (10) selon la revendication 1, **caractérisé en ce que** la première électrode (12) et la deuxième électrode (13) sont en contact direct avec un aliment traité pendant le processus de cuisson.

3. Dispositif de cuisson à champ électrique pulsé (10) selon la revendication 1, **caractérisé en ce qu'**une distance entre la première électrode (12) et la deuxième électrode (13) peut être adaptée en fonction de la taille de l'aliment.

4. Dispositif de cuisson à champ électrique pulsé (10) selon l'une quelconque des revendications précédentes, **caractérisé en ce que** la première électrode (12) et la deuxième électrode (13) sont reliées électriquement au générateur de champ électrique pulsé (14) responsable de l'application d'un champ électrique.
